# EUROPEAN PATENT APPLICATION

(11) **EP 1 561 852 A1**
(43) Date of publication of application: **10.08.2005**
(21) Application number: 04100435.9
(22) Date of filing: 05.02.2004
(51) Int. Cl.: D06F 37/26, F16F 15/28

(54) **Counterweight for washing machine tub and method for the manufacture thereof**

(71) Applicant: Electrolux Home Products Corporation N.V., 1930 Zaventem (BE)
(72) Inventor: Poloni, Fabio, 33078 San Vito al Tagliamento (IT)
(74) Representative: Giugni, Valter

(57) **Abstract**

Counterweight, connectable to a washing machine tub, comprising an hollow shell (2) having a substantially U-shaped cross-section profile with an open side for containing a concrete ballast mass (3) poured therein, the counterweight comprises a film element (4) associated to the hollow shell (2) in correspondence to the open side so as to cover an uncovered side of the concrete mass (3) poured inside the shell (2), the film element (4) and the shell (2) building a closed casing in order to encapsulate the concrete ballast mass (3). The invention further comprises a method for the manufacture of said counterweight.

## Description

The present invention refers to a counterweight, particularly for washing machine tub and a method for the manufacture thereof.

Clothes washing machines are generally known to be usually provided with counterweights which serve as means for ballasting the same machines so as to reduce the dynamic stresses that are imparted during the rotation of the drum in the washing and, above all, the high-speed spin-extraction phases of the clothes washing process. Such counterweights are generally secured to the exterior of the wash tub and are made in a variety of manners. Traditionally, they are formed by concrete blocks that are given appropriate shapes according to the position in which they are to be mounted, for instance on the front wall or the rear wall of the tub, or even on top of the same tub. Fastening means adapted to co-operate with corresponding attachment means provided on the wall of the tub are inserted in such concrete blocks so as to protrude from said blocks accordingly.

Counterweights are known which are obtained by blow moulding hollow bodies of plastic material that are then filled with concrete or any other material having similar properties.

These kind of counterweight have a high production cost, a limited maximum density, a non-constant weight because the difficulty of filling the plastic casing, poor or no adhesion between the plastic casing and the filling material.

Counterweights are also known, which are formed by two annular shells of plastic material adapted to enclose blocks of concrete or any other suitable material (US patent no. 5,211,038 and WO 00 22220).

Also these kind of counterweights have high production costs since they are provided with two shells manufactured in separate moulding steps in which a specific mould for each shell is utilised. One shell is commonly shaped so as to provide a profile matching the outer surface of the tub for fastening the counterweight.

Known preferred counterweights which do not have the above-mentioned drawbacks are formed by moulded flange of plastic material in the shape of a continuous hollow ring with a U-shaped cross-section, said flange being further provided with radial ribs adapted to accommodate, and keep in position, concrete masses (GB-A-2 044 298).

However such counterweight also have drawbacks since the concrete mass undergoes pulverisation and/or crumbling and the resulting powder and small fragments of material can damage the electromechanical components arranged in correspondence to the bottom of the washing machine casing. This is particular unpleasant because a larger number of failure increases the maintenance cost.

The object of the present invention is therefore to provide a counterweight, particularly for washing machine tub, which has all the advantages of known cement, but eliminates those drawbacks, which are jointly or separately present in the cited known art.

A further object of the present invention is to provide a simple and reliable counterweight, which is produced at reduced costs.

A further object of the present invention is to provide a simple, quick and safe method for the manufacture of said counterweight.

According to the present invention, these objects are attained by a counterweight having the characteristics as recited and defined in the appended claims 1 to 4.

The above-mentioned objects are also attained, according to the present invention by a method for the manufacture of said counterweight as defined in claim 5.

Anyway, features and advantages of the present invention will become more clearly evident from the description that is given below by way of a non-limiting example with reference to the accompanying drawings, in which:
- Figure 1 is a perspective view of a counterweight according to the present invention;
- Figure 2 is a perspective view of the counterweight shown in Fig. 1, with the film element associated to the shell.

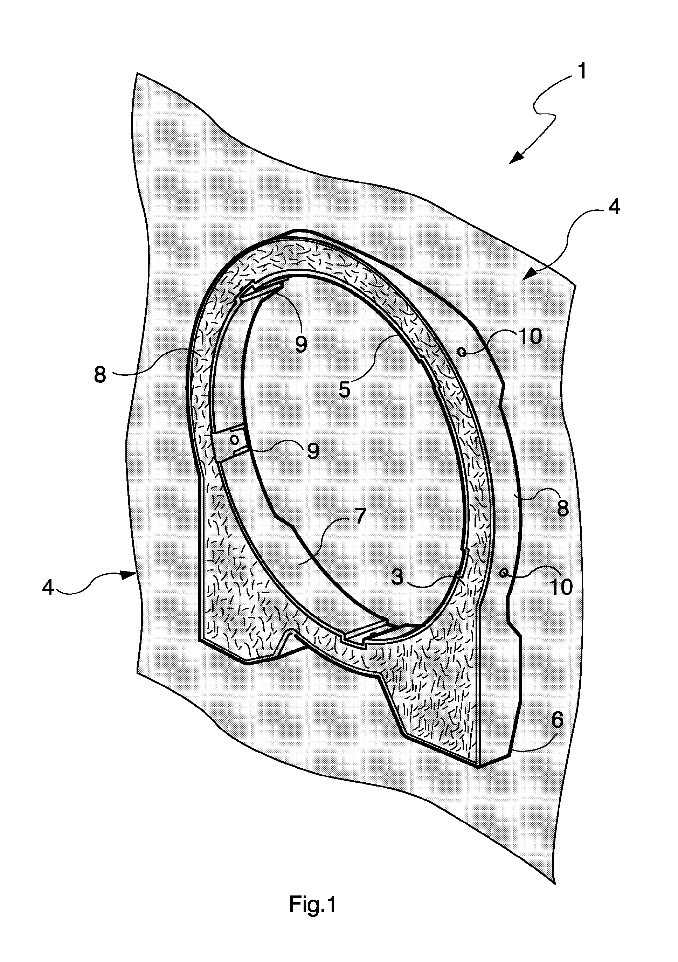

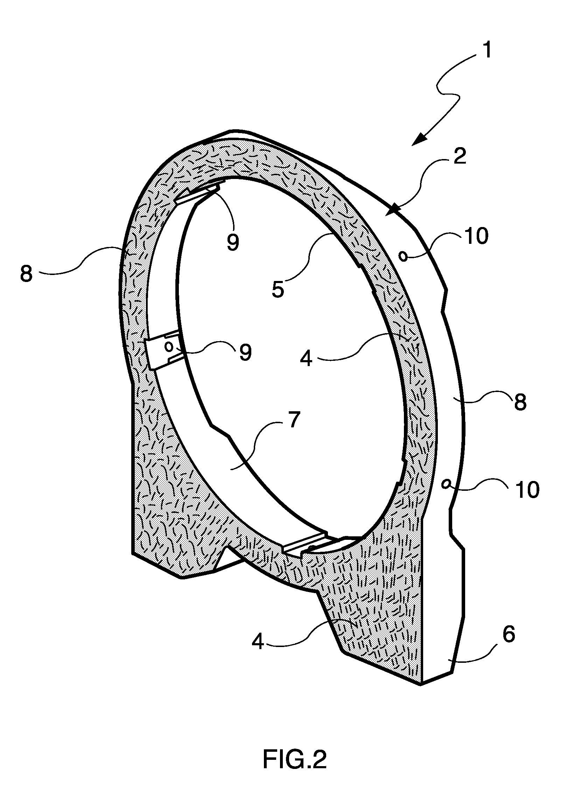

With reference to the figures 1 and 2, an embodiment of a counterweight 1 connectable to a washing machine tub, according to the present invention, comprises an hollow shell 2 of U-shaped cross-section for containing a concrete ballast mass 3 poured therein.

Expediently said shell 2 is said hollow shell is closed by means of a film element 4 in order to encapsulate said concrete ballast mass 3.

The shell 2 is made of moulded plastic material and comprises a main annular body 5 with two enlarged lower portion 6 of a downwards tapered shape which radially extend past the circumferential edge of the washing machine tub. The shell 2 is adapted to be filled with inert material mixed with water and additive, such as concrete or other material having similar properties, that are poured through the front open side of the shell 2.

The enlarged lower portions 6 of the shell 2 are provided to allow a larger material mass to be contained therein for increasing the whole ballast mass without affecting the washing machine casing overall dimensions.

The annular body 5 of the shell 2 comprises an inner circumferential edge 7 and an exterior circumferential edge 8 of larger diameter, which extends downwards, so as to form the enlarged lower portions. The shell 2 is sized so as to adapt and fit against the front part of the washing machine tub and the exterior circumferential edge 8 being in a position lying underneath the protruding portions of the same tub. Proper seats 9 and corresponding through bores 10 are provided on the circumferential edge 6, 7 to engage bolt and nut-lock systems in order to clamp the shell to the tub.

The film element 4, which includes a suitable sheet preferably made of plastic material 0.1 to 0.3 mm thick, is arranged in correspondence to the front open side of the shell 2 so as to cover the uncovered side of the concrete mass poured inside the shell 2. The film element 4 is associated to the annular body 5 and the enlarged lower portions 6 by welding along the free ends of the inner circumferential edge 7 and the exterior circumferential edge 8 that act as welding lines. The open side of the shell 2 is closed by the film element 4 which forms with the shell itself a casing adapted to encapsulate the ballast so as to isolate the concrete from the outside.

Clearly other known technique ca be utilised to fix the film element to the shell such as bonding, gluing or melting.

The method for the manufacture of the counterweight, according to the present invention, comprises essentially the following steps:
moulding the shell 2 in a proper mould,
pouring the concrete, therein,
applying the film element 4 in correspondence to the open side of the shell 2 so as to cover the uncovered portion of concrete mass 3,
welding the film element 4 along the free ends of the edges 7, 8 so as to form a closed casing encapsulating the concrete mass 3
cutting the redundant portion of the film element.

Conclusively, it can therefore be stated that the film element according to the present invention acts as an inexpensive protective envelope capable of holding the crumbled and cracked material of the ballast mass, thereby doing away with the serious drawback shown by prior-art counterweights.

## Claims

**1.** Counterweight, connectable to a washing machine tub, comprising an hollow shell (2) having a substantially U-shaped cross-section profile with an open side for containing a concrete ballast mass (3) poured therein **characterized in that** said counterweight comprises a film element (4) associated to said hollow shell (2) in correspondence to the open side so as to cover an uncovered portion of the concrete mass (3) poured inside the shell (2), said film element (4) and said shell (2) building a closed casing in order to encapsulate said concrete ballast mass (3).

**2.** Counterweight according to claim 1, **characterized in that** said film element (4) is associated to said shell (2) by welding.

**3.** Counterweight according to claim 1 or 2, **characterized in that** the film element (4) comprises a sheet made of plastic material 0.1 to 0.3 mm thick

**4.** Counterweight according to any one of the preceding claims, **characterized in that** said shell (2) comprises an annular body (5) having an inner circumferential edge (7) and an exterior circumferential edge (8) of larger diameter, free ends of said edges (7, 8) providing welding lines for the film element (4).

**5.** Method for the manufacture of a counterweight connectable to a washing machine tub according to claims 1 comprising the step of:
moulding said shell 2 in a proper mould,
pouring the concrete therein,
closing said open side,
**characterized in that** the closing step comprises:
applying said film element (4) in correspondence to the open side of the shell (2) so as to cover said uncovered portion of concrete mass (3),
welding the film element (4) along free ends of said shell (2) so as to form a closed casing encapsulating the concrete mass (3).

**5.** Method according to claims 5, **characterized in that** the welding step comprises:
cutting a redundant portion of the film element along said free ends of the shell (2).
